(19) Europäisches Patentamt
European Patent Office
Office européen des brevets

(11) **EP 4 618 528 A1**

(12) **EUROPÄISCHE PATENTANMELDUNG**

(43) Veröffentlichungstag:
**17.09.2025  Patentblatt 2025/38**

(21) Anmeldenummer: **24163310.6**

(22) Anmeldetag: **13.03.2024**

(51) Internationale Patentklassifikation (IPC):
**H04N 1/401** $^{(2006.01)}$  **H04N 1/405** $^{(2006.01)}$
**H04N 1/60** $^{(2006.01)}$

(52) Gemeinsame Patentklassifikation (CPC):
**H04N 1/4015; H04N 1/4052;** H04N 1/6041

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Akzenta Paneele + Profile GmbH**
**56759 Kaisersesch (DE)**

(72) Erfinder:
• **HANNIG, Hans-Jürgen**
**51427 Bergisch Gladbach (DE)**
• **KLEMM, Markus**
**33619 Bielefeld (DE)**
• **LINNENBRUEGGER, Timo**
**56812 Cochem (DE)**

(74) Vertreter: **Michalski Hüttermann & Partner Patentanwälte mbB**
**Kaistraße 16A**
**40221 Düsseldorf (DE)**

(54) **VERFAHREN ZUR FARBKORREKTUR IN EINEM DIGITALDRUCKVERFAHREN**

(57)    Die vorliegende Erfindung schlägt ein Verfahren zur Farbkorrektur in einem Digitaldruckverfahren vor, wobei mit einem Raster-Image-Prozessor (100) aus zumindest einem Farbauszug (101) eines vorgegebenen Digitalbildes (102) mit einem Screening-Algorithmus (103) ein gerasterter Farbauszug (104) erstellt wird, wobei der Screening-Algorithmus (103) Farbwerte des Farbauszugs sequenziell entlang eines Screening-Pfades einliest und auf Basis der eingelesenen Farbwerte und zumindest einem vorgegeben Schwellwert (Threshold) Punkte für den gerasterten Farbauszug erstellt, wobei jeweils in dem Fall dass der Screening-Algorithmus einen Punkt erstellt ein druckpositionsabhängiger Korrekturwert berücksichtigt wird.

Fig. 1

## EP 4 618 528 A1

**Beschreibung**

Die vorliegende Erfindung betrifft ein Verfahren zur Farbkorrektur in einem Digitaldruckverfahren.

Verfahren zur Farbkorrektur von Digitaldrucken sind an sich bekannt. Dabei werden Abweichungen von dem erwarteten Druckergebnis ermittelt und beim Druck derart berücksichtigt, dass der Druck mehr dem erwarteten Druckergebnis entspricht.

Ein großes Problem bei der Ausgabe von Digitalbildern ist es beim wiederholten Drucken eines Digitalbildes, auch nach längeren Pausen, Drucke zu erreichen, die möglichst geringe Abweichungen zu einem Referenzdruck aufweisen. Die Gründe für auftretende Abweichungen sind vielfältiger Natur, beispielsweise kann der Druckuntergrund bezüglich Farbe und Verlaufseigenschaften Unterschiede aufweisen oder der Drucker kann sich über die Zeit verändern.

Eine besondere Herausforderung stellt dabei die Farbkorrektur in Abhängigkeit der Position entlang der Druckbreite, also quer zur Vorschubrichtung des zu bedruckenden Mediums dar. Ein großes Problem bei der Ausgabe von Digitalbildern sind beispielsweise die durch Druckartefakte hervorgerufenen Farb- und Dichteunterschiede über die Druckbreite eines Druckers, welche besonders bei gleicher Farbe ("Unifarbe") häufig als Streifenbildung in Druckrichtung sichtbar werden. Die Gründe hierfür sind vielfältiger Natur, z.B. ist die Druckpunktgröße (Tropfengröße bei InkJet) über die gesamte Breite eines Druckkopfes und von Druckkopf zu Druckkopf niemals exakt gleich groß. Weiterhin unterliegt die Positionsgenauigkeit eines jeden Druckpunktes unterschiedlich großen Toleranzen und verändert somit den ursprünglich durch das Rippen gewünschten Tonwert bzw. kann durch Veränderung des Verhältnis von additiver und subtraktiver Farbmischung den wahrgenommenen Farbwert verändern. Weiterhin kann speziell im InkJet-Druck auf dem Substrat sich niederlegender Sprühnebel die jeweilig gewünschten Farb- und Dichtewerte verändern. Speziell im InkJet-Druck kann ein unterschiedliches Verlaufsverhalten, speziell auf nicht saugenden Materialien, aufgrund unterschiedlicher Position von Druckköpfen in Laufrichtung und deren Abstand zum Pinning oder zur Endtrocknung die Druckdichte ungünstig verändern. Weiterhin können speziell im InkJet-Druck Druckaussetzer (Nozzlefehler) das Druckresultat visuell negativ beeinflussen.

Um diese Druckartefakte bezüglich Position und Stärke zu ermitteln, werden bekannterweise Testbilder gedruckt und analysiert. Die daraus gewonnenen Informationen können dann auf vielfältige Art zu Korrektur benutzt werden.

Ein Problem in Bezug auf diese Art der Korrekturdatenermittlung ist jedoch, dass die daraus erzielbaren Resultate oft nicht ausreichend sind. Insbesondere wird die durch die Korrektur erzielte Homogenität in den Einzelfarben zum Teil beim Zusammendruck nicht gleichermaßen erreicht. Dies stellt insbesondere beim Druck von im wesentlichen unifarbenen Bildern ein großes Problem dar, weil verbleibende Abweichungen besonders stark auffallen und zu gut sichtbaren Streifen in Druckrichtung führen. Die Qualität der ermittelten Korrekturdaten kann dabei besonderen Einfluss auf die erzielbaren Resultate haben.

Beispielsweise beschreibt die EP 4113963 A1 ein Verfahren zur Farbkorrektur eines Digitaldruckers über eine Druckbreite des Digitaldruckers, aufweisend die Schritte: a) Bereitstellen eines vorgegebenen Digitalbildes, wobei das Digitalbild zumindest ein Farbkanalbild aufweist, wobei jedes Farbkanalbild einem Druckfarbkanal des Digitaldruckers zugeordnet ist; b) Bestimmen von zumindest einer Hauptfarbe des vorgegebenen Digitalbildes; c) Erstellen eines digitalen Testbildes, wobei das digitale Testbild mit zumindest einem unifarbenen Teststreifen versehen wird, der dazu vorgesehen ist über die Druckbreite des Digitaldruckers gedruckt zu werden, d) Drucken des digitalen Testbildes mit dem Digitaldrucker; e) Erfassen der Farbwerte des gedruckten Testbildes in Abhängigkeit der Druckbreite mit einem optischen Farbmessgerät; f) Erstellen von Korrekturdaten für den Digitaldrucker anhand der erfassten Farbwerte; und g) Anwenden der Korrekturdaten auf den Digitaldrucker und/oder das vorgegebene Digitalbild.

In bekannten Verfahren werden Korrekturdaten auf die eine oder andere Weise im Druckprozess berücksichtigt.

Um aktuelle farblichen Abweichungen schnell korrigieren zu können, kann z.B. an Systemen die auf einem Tintenstrahldrucker basieren mit Hilfe einer Einstellung der Druckkopfspannung eine farbliche Korrektur vorgenommen werden. Einige Systeme ermöglichen sogar die unabhängige Einstellung einzelner Teilbereiche der Druckköpfe. Dieses verändert aber den optimalen Arbeitspunkt des Druckkopfes und kann somit nur bedingt korrigierend eingesetzt werden. Außerdem können farbliche Abweichungen, die kleiner sind als die kleinsten einstellbaren Teilbereiche eines Druckkopfes - wie beispielsweise Nozzlefehler - nicht oder nur bedingt korrigiert werden.

Eine andere Möglichkeit ist mit Hilfe des zum Ausgabegerätes gehörenden Colormanagements neue in Teilbereichen farblich korrigierte Druckdaten zu erzeugen. Je nach Integration des Colormanagements in die Druckmaschine, der Zugänglichkeit der Druckmaschinenbediener auf das Colormanagement, sowie die Schnelligkeit des Colormanagements und der Gesamtgröße der digitalen Bilddatei, kann dieser Prozess aber eine nicht unerhebliche Zeit in Anspruch nehmen.

Andere Verfahren, die ein Zurückgreifen auf das Colormanagement zu vermeiden versuchen umfassen ein Senden von Korrektursignalen an die Druckkopfsteuerung, welche die Korrektur durch Anpassung von Anzahl und/oder Größe von Druckpunkten umsetzt. Ein Problem derartiger Verfahren ist jedoch, dass zur Umsetzung gegebenenfalls besondere Hardware notwendig ist. Ferner können derartige Verfahren Prozessbedingt die Korrektur nicht in Vorschubrichtung des Druckes und entlang der Druckbreite gleich berücksichtigen. Dadurch kann es zu Nachteilen im Druckergebnis kommen. Insbesondere können mit derartigen Verfahren besonders kleine Korrekturen die wegen diskreter Druckpunktgrößen auf mehrere Druckpunkte verteilt werden, nicht gleichmäßig in Druckvorschubrichtung und entlang der Druckbreite verteilt werden, wodurch Artefakte entstehen können.

Die EP 4113964 A1 beschreibt ein Verfahren zur Farbkorrektur eines Digitaldruckes, wobei der Digitaldruck die Ausgabe eines vorgegebenen Digitalbildes mit einem Digitaldrucker vorsieht, wobei das vorgegebenen Digitalbild dem Digitaldrucker als farbsepariertes Digitalbild mit zumindest einem Farbkanalbild bereitgestellt wird, wobei jedes Farbkanalbild einem Druckfarbkanal des Digitaldruckers zugeordnet ist und Informationen über vom Drucker zu setzende Druckpunkte des entsprechenden Druckfarbkanals aufweist und wobei ein Druckpunkt durch seine Druckposition und Druckpunktgröße definiert ist, wobei das Verfahren die Schritte aufweist: a) Bereitstellen von Korrekturdaten für den Digitaldruck, wobei die Korrekturdaten zumindest einen Korrekturwert für zumindest ein Farbkanalbild umfassen, b) Anwenden der Korrekturdaten auf das farbseparierte Digitalbild, wobei ein farbkorrigiertes farbsepariertes Digitalbild erhalten wird, c) optional Drucken des farbkorrigierten farbseparierten Digitalbildes mit dem Digitaldrucker.

EP 3570530 A1 beschreibt ein Verfahren zur Kompensation positionsabhängiger Dichteschwankungen in einer Inkjet-Druckmaschine durch einen Rechner, wobei im Rahmen der Kalibrierung eines Raster-Image-Prozessors der Inkjet-Druckmaschine mittels einer Look-Up-Table bestimmten Grauwerten eines zu rasternden Farbauszuges eines Druckbildes bestimmte Rastermuster zugeordnet werden, diese Rastermuster vom Rechner zur Rasterung des Druckbildes eingesetzt werden und das gerasterte Druckbild auf der Inkjet-Druckmaschine gedruckt wird, welches dadurch gekennzeichnet ist, dass die Look-Up-Table als zusätzliche Variable die Position jeder Druckdüse der Druckköpfe der Inkjet-Druckmaschine enthält und für jede Position einer Druckdüse in der Look-Up-Table jeweils ein kompletter Satz Grauwerte mit zugeordneten, angepassten Rastermustern durch den Rechner eingetragen wird.

Verfahren zur Farbkorrektur in einem Digitaldruckverfahren können dabei noch Verbesserungspotential bieten. Verbesserungspotential kann sich insbesondere darin bieten, dass die Farbkorrektur schneller und einfacher erfolgen kann. Besonders kann aber noch Verbesserungspotential in der Qualität der Ergebnisse der Korrektur und der Vermeidung von Artefakten bestehen.

Es ist daher die Aufgabe der vorliegenden Erfindung, ein verbessertes Verfahren zur Farbkorrektur in einem Digitaldruckverfahren bereitzustellen.

Gelöst wird diese Aufgabe durch das Verfahren gemäß Anspruch 1 sowie ferner durch die Vorrichtung nach Anspruch 14 und die Verwendung nach Anspruch 15. Bevorzugte Ausgestaltungen der Erfindung sind in den Unteransprüchen, in der Beschreibung, oder den Figuren angegeben, wobei weitere in den Unteransprüchen oder in der Beschreibung, oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Mit der Erfindung wird ein Verfahren zur Farbkorrektur in einem Digitaldruckverfahren vorgeschlagen,

> wobei mit einem Raster-Image-Prozessor aus zumindest einem Farbauszug eines vorgegebenen Digitalbildes (Contone-Image) mit einem Screening-Algorithmus ein gerasterter Farbauszug (Halftone-Image) erstellt wird,
> wobei der Screening-Algorithmus Farbwerte des Farbauszugs sequenziell entlang eines Screening-Pfades einliest und auf Basis der eingelesenen Farbwerte und zumindest einem vorgegeben Schwellwert (Threshold) Punkte für den gerasterten Farbauszug erstellt, wobei jeweils in dem Fall, dass der Screening-Algorithmus einen Punkt erstellt ein druckpositionsabhängiger Korrekturwert berücksichtigt wird.

Durch das erfindungsgemäße Verfahren können überraschender Weise vielfältige Vorteile erreicht werden. Insbesondere kann das Verfahren besonders einfach in bestehende Prozesse integriert werden. Ferner ist das Verfahren besonders effizient im Vergleich zu anderen Korrekturverfahren und beeinflusst die Geschwindigkeit des im Digitaldruck ohnehin zu verwendenden Raster-Image-Prozessors kaum. Zudem können mit dem erfindungsgemäßen Verfahren eine besonders genaue Farbkorrektur erreicht werden und zugleich können Artefakte reduziert werden. Insbesondere können mit dem erfindungsgemäßen Verfahren Farbkorrekturen gleichzeitig sowohl bei kleineren als auch bei größeren Farbabweichungen besonders gut erreicht werden. Beispielsweise können mit dem erfindungsgemäßen Verfahren auch Farbabweichungen korrigiert werden, die durch Abweichungen einzelner Druckdüsen (Nozzlefehler) hervorgerufen werden, insbesondere beim Druck mit mehreren in Druckrichtung hintereinander angeordneten Reihen (Farbdoppelreihen).

In anderen Worten wird ein Verfahren zur Farbkorrektur vorgeschlagen, dass in einem Digitaldruckverfahren anzuwenden ist. Dabei wir ein Raster-Image-Prozessor verwendet. Dem Raster-Image-Prozessor wird zumindest ein Farbauszug eines vorgegebenen Digitalbildes zugeführt. Dieses wird mit einem Screening-Algorithmus gerastert, wobei ein gerasterter Farbauszug erstellt wird, der beispielsweise mit einem Drucker des Digitaldruckverfahrens gedruckt werden kann. Dabei liest der Screening-Algorithmus entlang eines Screening-Pfades Farbwerte des Farbauszuges sequenziell ein und erstellt auf Basis der eingelesenen Farbwerte und zumindest einem Schwellwert Punkte für den gerasterten Farbauszug. Wenn der Screening-Algorithmus dabei einen Punkt erstellt, berücksichtigt der Screening-Algorithmus einen druckpositionsabhängiger Korrekturwert.

Unter einem Digitaldruckverfahren wird im Sinne der vorliegenden Erfindung insbesondere ein Verfahren zum Drucken eines Digitalbildes mit einem Digitaldrucker verstanden. Unter einem Digitaldrucker wird im Sinne der vorliegenden Erfindung insbesondere eine Vorrichtung verstanden, die farbige Druckpunkte auf einem Substrat ausgeben kann, die das entsprechende Bild ausbilden.

Bevorzugt kann vorgesehen sein, dass der mit dem Verfahren erhaltene gerasterte Farbauszug auf einem Digitaldrucker gedruckt wird.

Bevorzugt kann vorgesehen sein, dass das Digitaldruckverfahren ein Inkjet-Digitaldruckverfahren ist. Weiter bevorzugt kann vorgesehen sein, dass der gerasterte Farbauszug auf einem Inkjet-Drucker gedruckt wird.

Unter einem Digitalbild wird im Sinne der vorliegenden Erfindung insbesondere ein digital speicherbares Bild verstanden, dessen Bildinformationen positionsabhängige Farbwerte bezüglich eines Farbsystems aufweisen. Ein vorgegebenes Digitalbild ist im Sinne der vorliegenden Erfindung insbesondere ein Digitalbild das zum Drucken vorgesehen ist. Beispielsweise kann das vorgegebene Digitalbild ein pixelbasiertes oder ein vektorbasiertes Bild sein.

Unter einem Farbauszug kann demnach im Sinne der vorliegenden Erfindung insbesondere ein Teil des Digitalbildes verstanden werden, der nur die Informationen zu einem Farbkanal des Farbsystems aufweist in dem das Digitalbild gespeichert ist. Beispielsweise kann das Digitalbild über Farbwerte im CMYK Farbsystem definiert sein und der Farbauszug weist beispielsweise nur die Farbwerte des C-Farbkanals auf.

Im Sinne der vorliegenden Erfindung ist demnach insbesondere zu unterschieden zwischen einem Farbauszug des vorgegebenen Digitalbilds, der insbesondere über kontinuierliche Farbwerte definiert sein kann (Contone-Image), und einem gerasterten Farbauszug, der insbesondere über einfarbige Punkte definiert sein kann (Halftone-Image).

Bevorzugt kann vorgesehen sein, dass die Farbe des Farbauszugs und des gerasterten Farbauszugs einer Prozessfarbe des für das Digitaldruckverfahren vorgesehenen Druckers entspricht. Wenn das Verfahren mehrere Farbauszüge und gerasterte Farbauszüge umfasst, kann bevorzugt vorgesehen sein, dass die Farben der Farbauszüge und gerasterten Farbauszüge jeweils den Prozessfarben des für das Digitaldruckverfahren vorgesehen Druckers entsprechen.

Bevorzugt kann für das Digitaldruckverfahren ein Inkjet-Drucker vorgesehen sein, der besonders bevorzugt als Prozessfarben die Farben Cyan, Magenta, Gelb und Schwarz (CMYK) umfasst. Dabei kann besonders bevorzugt vorgesehen sein, dass das Verfahren aus einem cyanfarbenen Farbauszug, einen magentafarbenen Farbauszug, einen gelben Farbauszug und einen schwarzen Farbauszug des vorgegebenen Digitalbildes jeweils mit dem Screening-Algorithmus in einen entsprechenden gerasterten Farbauszug (Halftone-Image) erstellt.

Unter einem Raster-Image-Prozessor wird im Sinne der vorliegenden Erfindung insbesondere eine Software verstanden, die auf einem Rechner ausgeführt wird, beispielsweise dem Rechner des Druckers, der für das Digitaldruckverfahren verwendet wird.

Unter einem Screening-Algorithmus wird im Sinne der vorliegenden Erfindung insbesondere eine Routine des Raster-Image-Prozessors verstanden, die einen entsprechenden gerasterten Farbauszug erstellen kann.

Unter Farbwerten des Farbauszugs werde im Sinne der vorliegenden Erfindung insbesondere vom Screening-Algorithmus einlesbare Werte für die Farbe an den verschiedenen Positionen des Farbabzuges verstanden. Beispielsweise kann die Farbe des Farbauszuges durch 8-Bit-Grauwerte bzw. Farbsättigung definiert sein, also eine Abstufung von 256 Grauwerten.

Unter einem Screening-Pfad wird dabei im Sinne der vorliegenden Erfindung insbesondere ein dem Screening-Algorithmus vorgegebener oder im Screening-Algorithmus implementierter Pfad verstanden, entlang dem der Farbauszug teilweise oder im Wesentlichen vollständig bzw. flächendeckend eingelesen werden kann. Der Screening-Pfad gibt also insbesondere vor in welcher Reihenfolge Farbwerte von verschiedenen Flächenabschnitten des Farbauszuges eingelesen werden.

In einer bevorzugten Ausgestaltung kann vorgesehen sein, dass der Screening-Pfad über das vorgegebene Digitalbild in parallelen, aufeinanderfolgenden und äquidistanten Zeilen verläuft. Bevorzugt kann dabei vorgesehen sein, dass der Screening-Pfad die Zeilen in alternierender Richtung einliest. Die Zeilen können dabei beispielsweise parallel, orthogonal, diagonal oder in einem anderen bestimmten Winkel zu einer vorgesehen Druckvorschubrichtung verlaufen. Alternativ können die Zeilen parallel, orthogonal, diagonal oder in einem anderen bestimmten Winkel zu einem vorgesehenen Druckrasterwinkel des betroffenen Farbauszugs verlaufen. In einer bevorzugten Ausgestaltung kann vorgesehen sein, dass der Screening-Pfad gemäß einem Algorithmus bestimmt wird, beispielsweise mit einem chaotischen Algorithmus.

In einer bevorzugten Ausgestaltung kann vorgesehen sein, dass mit dem Raster-Image-Prozessor aus dem zumindest einen Farbauszug des vorgegebenen Digitalbildes der gerasterte Farbauszug mit mehr als einem Screening-Algorithmus erstellt wird und/oder der Screening-Algorithmus mehr als einen Screening-Pfad vorsieht. Dabei kann insbesondere vorgesehen sein, dass mehrere Screening-Algorithmen zumindest teilweise zeitgleich (prozessual parallel) den gerasterten Farbauszug erstellen und/oder mehrere Screening-Pfade zumindest teilweise zeitgleich (prozessual parallel) den Farbauszug einlesen. Beispielsweise kann vorgesehen sein, dass verschiedene Screening-Pfade an unterschiedlichen Stellen des Farbauszuges beginnen und somit jeweils Teilbereiche des Farbauszuges abdecken.

Alternativ kann beispielsweise vorgesehen sein, dass die Screening-Pfade nebeneinander oder gegenläufig verlaufen. Durch die Verwendung mehrerer Screening-Algorithmen und/oder Screening-Pfade kann insbesondere erreicht werden, dass der Prozess einfacher parallelisiert werden kann.

Unter einem vorgegebenen Schwellwert wird im Sinne der vorliegenden Erfindung insbesondere ein Wert verstanden, bei dessen erreichen oder überschreiten von dem Screening-Algorithmus ein Punkt erstellt wird. Beispielsweise kann der Schwellwert auf das Format der eingelesenen Farbwerte abgestimmt sein, also zum Beispiel ebenfalls als 8-Bit Wert. Ferner können die Schwellwerte insbesondere an den zum Drucken vorgesehen Drucker und/oder das verwendete Raster angepasst sein.

In anderen Worten wird der Farbwert bevorzugt vom Screening-Algorithmus beim Einlesen so lange aufsummiert bzw. integriert bis er den entsprechend vorgegebenen Schwellwert erreicht. Daraufhin wird ein Punkt im gerasterten Farbauszug erstellt.

Unter einem druckpositionsabhängigen Korrekturwert wird im Sinne der vorliegenden Erfindung insbesondere ein Wert verstanden, der farbliche Abweichungen von einem gedruckten Bild zu einem vorgegebenen Bild in Abhängigkeit der Druckposition beschreibt. In anderen Worten kann unter dem druckpositionsabhängigen Korrekturwert demnach ein Korrekturwert verstanden werden, der abhängig von einer vorgesehenen Druckposition unterschiedliche Werte annehmen kann. Unter der Druckposition ist dabei insbesondere die Position beim Drucken des gerasterten Farbauszugs auf einem Druckmedium in Abhängigkeit zum Drucker zu verstehen.

Bevorzugt kann vorgesehen sein, dass der Digitaldrucker eine Vorschubrichtung (y) für ein zu bedruckendes Medium aufweist und der Korrekturwert abhängig ist von der Druckposition (x) quer zur Vorschubrichtung. Beispielsweise kann vorgesehen sein, dass die Korrekturwerte ein kontinuierliches Profil in Abhängigkeit der Druckposition (x) quer zur Vorschubrichtung des Digitaldruckers sind.

Bevorzugt kann vorgesehen sein, dass die Korrekturwerte Informationen zur Position von Druckdüsen des Digitaldruckers umfassen. Beispielsweise kann vorgesehen sein, dass die Korrekturwerte diskrete Werte für die spezifischen Positionen der Druckdüsen des Digitaldruckers quer zur Vorschubrichtung des Digitaldruckers sind.

Wenn das Verfahren mehrere Farbauszüge und gerasterte Farbauszüge umfasst, kann bevorzugt vorgesehen sein, dass der Screening-Algorithmus bei der Erstellung jedes gerasterten Farbauszugs einen druckpositionsabhängiger Korrekturwert berücksichtigt. Dabei kann vorgesehen sein, dass für jede Prozessfarbe eigene bzw. unabhängige druckpositionsabhängige Korrekturwerte berücksichtigt werden.

Alternativ kann auch vorgesehen sein, dass der Screening-Algorithmus nicht bei der Erstellung jedes gerasterten Farbauszugs einen druckpositionsabhängigen Korrekturwert berücksichtigt. Beispielsweise kann das Verfahren aus einem cyanfarbenen Farbauszug, einen magentafarbenen Farbauszug, einen gelben Farbauszug und einen schwarzen Farbauszug des vorgegebenen Digitalbildes jeweils mit dem Screening-Algorithmus in einen entsprechenden gerasterten Farbauszug (Halftone-Image) erstellt, wobei der Screening-Algorithmus bei der Erstellung des gelben gerasterten Farbauszugs keinen druckpositionsabhängigen Korrekturwert berücksichtigt.

Bevorzugt kann vorgesehen sein, dass der Screening-Algorithmus bei der Erstellung des gerasterten Farbauszug ein Raster zu verwendet, beispielsweise ein AM-Raster oder ein FM-Raster, wobei vorzugsweise das Verfahren mehrere Farbauszüge und gerasterte Farbauszüge umfasst und der Screening-Algorithmus bei der Erstellung der gerasterten Farbauszüge ein Rastersystem verwendet, beispielsweise ein AM-Rastersystem oder ein FM-Rastersystem.

Bevorzugt kann das vorgegebenen Digitalbild in einem vorgeschalteten Color-Management verarbeitet werden. Insbesondere kann das vorgegebene Digitalbild mit dem vorgeschalteten Color-Management in ein an den Farbraum des vorgesehen Druckverfahrens angepasste Bildformat umgewandelt werden und ein entsprechendes farbsepariertes Bild umfassend entsprechend Farbauszüge erstellt werden. Dabei können weitere Korrekturwerte, insbesondere druckpositionsunabhängige Korrekturwerte, im Color-Management berücksichtigt werden.

Bevorzugt kann vorgesehen sein, dass der druckpositionsabhängige Korrekturwert das Produkt aus einem druckpositionsspezifischen Korrektur-Rohwert und optional zumindest einem Skalierungsfaktor ist, wobei der Skalierungsfaktor bevorzugt ausgewählt ist aus einem konstanten Skalierungsfaktor, einem farbwertabhängigen Skalierungsfaktor und einem punktgrößenabhängigen Skalierungsfaktor, wobei besonders bevorzugt der druckpositionsabhängige Korrekturwert das Produkt aus dem druckpositionsspezifischen Korrektur-Rohwert, dem konstanten Skalierungsfaktor und dem punktgrößenabhängigen Skalierungsfaktor ist.

Bevorzugt kann unter einem konstanten Skalierungsfaktor ein Skalierungsfaktor verstanden werden, der nicht von weiteren Parametern abhängt, also die Korrekturdaten linear (alle um den gleichen Faktor) skaliert. Dadurch kann im Wesentlichen die Stärke der Korrektur insgesamt beeinflusst werden. Das kann insbesondere von Vorteil sein, wenn bei Anwendung des Verfahrens die Farbkorrektur nicht ausreichend oder übermäßig stark ist.

Bevorzugt kann unter einem farbwertabhängigen Skalierungsfaktor ein Skalierungsfaktor verstanden werden, der vom eingelesenen Farbwert abhängt, also der abhängig vom eingelesenen Farbwert unterschiedliche Werte annehmen kann. Somit wird bei Anwendung des druckpositionsabhängigen Korrekturwertes nicht nur die Druckposition berücksichtigt, sondern auch der an dieser Stelle zu Grunde gelegte Farbwert. Insbesondere kann ein farbwertabhängiger Skalierungsfaktor den Skalierungsfaktor in Abhängigkeit des eingelesenen Farbwertes als Funktion darstellen, beispielsweise als lineare Funktion oder Polynom. Dadurch kann beispielsweise erreicht werden, dass besonders helle oder dunkle Farbwerte entsprechend stärker oder schwächer korrigiert werden.

In einer bevorzugten Ausgestaltung kann vorgesehen sein, dass der Skalierungsfaktor abhängig ist von der Farbe des vorgegebenen Digitalbildes. Darunter ist insbesondere zu verstehen, dass der Skalierungsfaktor nicht nur vom Farbwert des jeweiligen Farbauszuges abhängig ist, sondern von der Farbe des vorgegebenen Digitalbildes als solches. Der Skalierungsfaktor kann dabei für die verschiedenen Farben bevorzugt auf Basis von Testmessungen interpoliert werden. Dadurch kann beispielsweise der Zusammendruck verschiedener Prozessfarben berücksichtigt werden.

Bevorzugt kann unter einem punktgrößenabhängigen Skalierungsfaktor im Sinne der vorliegenden Erfindung ein Skalierungsfaktor verstanden, der von der Punktgröße des erstellten Punktes abhängt. Somit wird bei Anwendung des druckpositionsabhängigen Korrekturwertes nicht nur die Druckposition berücksichtigt, sondern auch die Größe des an dieser Stelle vorgesehenen Druckpunktes. Insbesondere kann ein punktgrößenabhängiger Skalierungsfaktor den Skalierungsfaktor in Abhängigkeit der Punktgröße als Tabelle darstellen, so dass jeder vom Drucker erreichbaren Punktgröße ein eigener Skalierungsfaktor zugeordnet wird. Dabei kann der Skalierungsfaktor alternativ auch als Funktion der Punktgröße angegeben werden. Eine Umwandlung zwischen Tabelle und Funktion wäre durch Interpolation der Tabellendaten oder Berechnen der Funktionswerte für die vom Drucker erreichbaren Punktgrößen möglich.

Beispielsweise kann der druckpositionsspezifischen Korrektur-Rohwert k für einen Inkjet-Drucker abhängig sein von der Druckposition x quer zur Vorschubrichtung y, und somit beispielsweise dargestellt werden als k(x). Zusammen mit dem konstanten Skalierungsfaktor s und dem punktgrößenabhängigen Skalierungsfaktor s'(Punktgröße) kann sich somit druckpositionsabhängigen Korrekturwert K(x, Punktgröße) ergeben:

$$K(x, \text{Punktgröße}) = k(x) \times s \times s\text{'}(\text{Punktgröße}).$$

Bevorzugt kann vorgesehen sein, dass der druckpositionsabhängige Korrekturwert aus der Farbdifferenz zwischen zumindest einem vorgegebenen Testbild und druckpositionsabhängigen Farbmessungen eines auf Basis des vorgegebenen Testbildes erstellten Testdruckes erhalten wurde, insbesondere von Testdrucken mit verschiedenen Farbwerten und/oder Punktgrößen.

In einer bevorzugten Ausgestaltung wird der Korrekturwert wie die Korrekturdaten in der EP 4113964 A1 erhalten. In anderen Worten kann demnach bevorzugt vorgesehen sein, dass eine Testfarbe des vorgegebenen Digitalbildes bestimmt wird und ein Testbild aufweisend zumindest einen unifarbenen Testreifen, der dazu vorgesehen ist über die Druckbreite des Digitaldruckers gedruckt zu werden, erstellt wird, das digitale Testbild mit dem Digitaldrucker gedruckt wird und die Farbwerte des gedruckten Testbildes in Abhängigkeit ihrer Position in Richtung der Druckbreite mit einem optischen Farbmessgerät erfasst werden und Korrekturdaten für den Digitaldrucker anhand der erfassten Farbwerte erstellt werden.

Bevorzugt kann vorgesehen sein, dass die in Schritt b) bestimmte Testfarbe eine Hauptfarbe des vorgegebenen Digitalbildes ist. Unter einer Hauptfarbe des vorgegebenen Digitalbildes ist im Sinne der vorliegenden Erfindung insbesondere ein Farbwert zu verstehen, der einen wesentlichen Anteil am Digitalbild hat.

Bevorzugt kann vorgesehen sein, dass das Drucken des digitalen Testbildes mit dem Digitaldrucker auf einem Drucksubstrat erfolgt, das das gleiche Drucksubstrat ist, auf dem auch das vorgegebene Digitalbild gedruckt werden soll.

Bevorzugt kann vorgesehen sein, dass zumindest ein unifarbener Teststreifen über die Druckdichte aller Prozessfarben des Digitaldruckers definiert ist; und/oder

zumindest ein unifarbener Teststreifen über die Druckdichte von einer einzelnen Prozessfarbe des Digitaldruckers definiert ist; und/oder
zumindest ein unifarbener Teststreifen über die Druckdichte von mehr als einem und weniger als allen Prozessfarben des Digitaldruckers definiert ist.

In einer bevorzugten Ausgestaltung kann vorgesehen sein, dass das digitale Testbild jeweils zumindest einen der vorgenannten unifarbenen Teststreifen aufweist. Dadurch kann vorteilhafterweise erreicht werden, dass die Korrektur besonders erfolgreich ist. Ohne an eine Theorie gebunden zu sein, wird davon ausgegangen, dass sich durch die Kombination dieser Teststreifen erreichen lässt, dass die Quelle der Druckartefakte besonders sicher identifiziert werden kann, so dass sich eine Farbkorrektur erreichen lässt, die besonders gute und stabile Ergebnisse liefert.

Bevorzugt kann vorgesehen sein, dass die Prozessfarben des Digitaldruckers eine Druckreihenfolge aufweisen, wobei der unifarbene Teststreifen, der über die Druckdichte von einer einzelnen Prozessfarbe des Digitaldruckers definiert ist, über die Druckdichte des nach der Druckreihenfolge zuerst zu druckenden Druckfarbkanals definiert ist.

Dadurch kann erreicht werden, dass die Farbkorrektur bei der zuerst zu druckenden Farbe beginnt, wodurch ohne an eine Theorie gebunden zu sein, insbesondere eine weitere Korrektur vereinfacht wird, da eine Überlagerung verschiedener Effekte bei der Anwendung der Korrektur vermieden wird.

Bevorzugt kann vorgesehen sein, dass die unifarbenen Testreifen, die über die Druckdichte von mehr als einem und weniger als allen Druckfarbkanälen des Digitaldruckers definiert sind, so ausgewählt sind, dass

ein erster dieser unifarbenen Teststreifen über die Druckdichte der nach der Druckreihenfolge zuerst zu druckenden Prozessfarbe definiert ist und zusätzlich über die Druckdichte der nach der Druckreihenfolge als nächstes zu druckenden Prozessfarbe,

und optional jeder weitere dieser unifarbenen Teststreifen über die Druckdichte des jeweils vorherigen unifarbenen Testreifens definiert ist und zusätzlich über die Druckdichte der nach der Druckreihenfolge als nächstes zu druckenden Prozessfarbe.

Dadurch kann erreicht werden, dass jeweils Prozessfarben in den Teststreifen so kombiniert werden, dass jeweils nur ein Druckfarbkanal von einem ersten zu einem zweiten Teststreifen hinzukommt, so dass die Farbkorrektur besonders einfach und zuverlässig berechnet werden kann.

Beispielsweise kann besonders bevorzugt vorgesehen sein, dass zum Druck einer Testfarbe vier Prozessfarben vorgesehen sind, beispielsweise CMYK, wobei die Druckfarbkanäle in der Reihenfolge C, M, Y und K gedruckt werden. Das digitale Testbild kann dann besonders bevorzugt vier unifarbene Teststreifen aufweisen, wobei der erste unifarbene Teststreifen über die zum Drucken der Testfarbe vorgesehene Druckdichte des C-Druckfarbkanals definiert ist, der zweite unifarbene Teststreifen über die zum Drucken der Testfarbe vorgesehen Druckdichte des C- und M-Druckfarbkanals definiert ist, der dritte unifarbene Teststreifen über die zum Drucken der Testfarbe vorgesehene Druckdichte des C-, M- und Y-Druckfarbkanals definiert ist, und der vierte unifarbene Teststreifen über die zum Drucken der Testfarbe vorgesehene Druckdichte aller Prozessfarben CMYK definiert ist. Insbesondere kann beispielsweise vorgesehen sein, dass mehrere Testfarben des vorgegebenen Digitalbildes bestimmt wurden und die vorbeschriebenen unifarbenen Teststreifen jeweils für jede Testfarbe bestimmt werden.

Dadurch kann erreicht werden, dass mit einer besonders geringen Anzahl an Teststreifen sowohl Artefakte, die durch einzelne Druckkopfreihen entstehen, als auch Artefakte, die durch den Zusammendruck mehrerer Farben entstehen, durch die Farbkorrektur ausgeglichen werden können. Insbesondere kann dadurch erreicht werden, dass die Farbkorrektur zuverlässig und zielsicher diese Artefakte berücksichtigt, ohne komplizierte Rechenverfahren nutzen zu müssen um die Effekte auseinanderzurechnen.

Bevorzugt kann vorgesehen sein, dass die Testfarben ausgewählt werden aus den am häufigsten im vorgegebenen Digitalbild vorkommenden Farben, wobei optional zwischen mehreren Testfarben ein Mindestabstand im Farbraum eingehalten wird, und/oder die Testfarben unabhängig von einer Farbhäufigkeit im vorgegebenen Digitalbild ausgewählt werden und ein möglichst großer Abstand zwischen den Testfarben im Farbraum eingehalten wird.

Bevorzugt kann vorgesehen sein, dass beim Erstellen des Testdruckes auf Basis des vorgegebenen Testbildes ein Screening-Algorithmus verwendet wird, der das gleiche Rastersystem verwendet wie der Screening-Algorithmus zum Erstellen des gerasterten Farbauszugs aus dem Farbauszug des vorgegebenen Digitalbildes.

Bevorzugt kann vorgesehen sein, dass der druckpositionsabhängige Korrekturwert derart berücksichtigt wird, dass für die vom Screening-Algorithmus erstellten Punkte jeweils eine Punktgröße auf Basis des eingelesenen Farbwertes, des vorgegebenen Schwellwertes und des druckpositionsabhängigen Korrekturwertes bestimmt wird.

In anderen Worten wird somit bevorzugt der Screening-Algorithmus ausgeführt und der Farbwert $C(x,y)$ eingelesen. Dieser wird so lange aufsummiert bzw. integriert bis er einen entsprechenden Schwellwert $T$ erreicht. Daraufhin wird ein Punkt $B(x,y)$ im gerasterten Farbauszug erstellt. Der Screening-Algorithmus bestimmt dabei die Punktgröße indem der eingelesene Farbwert $C(x,y)$, der Schwellwert $T$ und der an der entsprechenden Druckposition vorgesehenen druckpositionsabhängigen Korrekturwert $K(x)$ berücksichtigt wird.

Dabei kann bevorzugt vorgesehen sein, dass der berücksichtigte druckpositionsabhängige Korrekturwert abhängig von der zu erstellenden Punktgröße oder des eingelesenen Farbwertes ist.

Bevorzugt kann vorgesehen sein, dass der druckpositionsabhängige Korrekturwert wie vorbeschrieben derart berücksichtigt wird, dass für die vom Screening-Algorithmus erstellten Punkte jeweils eine Punktgröße auf Basis des eingelesenen Farbwertes, des vorgegebenen Schwellwertes und des druckpositionsabhängigen Korrekturwertes bestimmt wird, wobei das Raster ein AM-Raster ist.

Sind mehrere Punktgrößen vorgesehen, umfasst der Schwellwert $T$ mehrere Schwellwerte, also beispielsweise für jede vorgesehene Punktgröße einen eigenen Schwellwert. Erreicht der eingelesene Farbwert beispielsweise einen ersten Schwellwert $T_1$ und nicht einen zweiten Schellwert $T_2$, wird ein Punkt $B(x,y)$ mit Punktgröße $P_1$ erstellt. Erreicht der der Screening-Algorithmus stattdessen aber direkt den zweiten Schwellwert $T_2$, der größer ist als der erste Schwellwert $T_1$, wird ein Punkt $B(x,y)$ mit Punktgröße $P_2$ erstellt. Entsprechendes kann bevorzugt für alle vom Drucker umsetzbaren Punktgrößen bis zu einem maximalen Schwellwert $T_{max}$ und einer maximalen Punktgröße $P_{max}$ vorgesehen sein.

Bevorzugt kann vorgesehen sein, dass der Screening-Algorithmus einen Fehlerverteilungsalgorithmus umfasst, wobei vorzugsweise der Fehlerverteilungsalgorithmus einen Fehler aus der Differenz zwischen dem erstellten Punkt und zumindest dem für die Erstellung des jeweiligen Punktes verwendeten Farbwert berechnet, wobei der Fehler auf den Farbwert von zumindest einer entlang des Screening-Pfades noch nicht eingelesenen Position verteilt wird, und wobei der Fehler vorzugsweise den druckpositionsabhängigen Korrekturwert berücksichtigt.

In anderen Worten wird somit bevorzugt der Screening-Algorithmus ausgeführt und der Farbwert C(x,y) eingelesen. Dieser wird so lange aufsummiert bzw. integriert bis er einen entsprechenden Schwellwert T erreicht. Daraufhin wird ein Punkt B(x,y) im gerasterten Farbauszug erstellt. Der Fehler e(x,y) des Fehlerverteilungsalgorithmus wird dabei aus der Differenz zwischen dem erstellen Punkt B(x,y) und dem aufsummierten bzw. integrierten Farbwert C(x,y) bestimmt, der für die Erstellung des Punktes zu Grunde gelegt wurde. Also dem entsprechenden aufsummierten bzw. integrierten Farbwert. Der Fehler e(x,y) wird sodann mit den folgenden eingelesenen Farbwerten C(x,y) verrechnet. Dabei wird der druckpositionsabhängige Korrekturwert K(x) berücksichtigt.

Sind mehrere Punktgrößen und Schwellwerte vorgesehen, wird der Fehler e(x,y) bevorzugt aus der Differenz zwischen dem erstellen Punkt B(x,y) und dem aufsummierten bzw. integrierten Farbwert C(x,y) derart bestimmt, dass die Punktgröße des Punktes mitberücksichtigt wird.

In einer bevorzugten Ausgestaltung kann vorgesehen sein, dass für die vom Screening-Algorithmus erstellten Punkte jeweils eine Punktgröße auf Basis des eingelesenen Farbwertes, des vorgegebenen Schwellwertes und des druckpositionsabhängigen Korrekturwertes bestimmt wird, und der Fehler des Fehlerverteilungsalgorithmus aus der Differenz zwischen dem erstellten Punkt und der Summe des für die Erstellung des jeweiligen Punktes verwendeten Farbwertes und des druckpositionsabhängigen Korrekturwertes berechnet wird.

In anderen Worten wird somit bevorzugt der Screening-Algorithmus ausgeführt und der Farbwert C(x,y) eingelesen. Dieser wird so lange aufsummiert bzw. integriert bis er einen entsprechenden Schwellwert T erreicht. Der Screening-Algorithmus bestimmt dabei die Punktgröße indem der eingelesene Farbwert C(x,y), der Schwellwert T und der an der entsprechenden Druckposition vorgesehenen druckpositionsabhängigen Korrekturwert K(x) berücksichtigt wird. Es wird der druckpositionsabhängige Korrekturwert K(x) mit dem aufsummierten bzw. integrierten Farbwert C(x,y) addiert und auf Basis des erhaltenen Betrags ein Punkt B(x,y) im gerasterten Farbauszug erstellt. Der Fehler e(x,y) des Fehlerverteilungsalgorithmus wird dabei aus der Differenz zwischen dem erstellen Punkt B(x,y) und dem eingelesenen Farbwert C(x,y) und dem druckpositionsabhängigen Korrekturwert K(x) bestimmt, der für die Erstellung des Punktes zu Grunde gelegt wurde. Der Fehler e(x,y) wird sodann mit den folgenden eingelesenen Farbwerten C(x,y) verrechnet.

Sind mehrere Punktgrößen und Schwellwerte vorgesehen, wird der Fehler e(x,y) bevorzugt aus der Differenz zwischen dem erstellen Punkt B(x,y), dem aufsummierten bzw. integrierten Farbwert C(x,y) und dem Korrekturwert K(x) derart bestimmt, dass die Punktgröße des Punktes mitberücksichtigt wird.

Bevorzugt kann vorgesehen sein, dass für die vom Screening-Algorithmus erstellten Punkte wie vorbeschrieben jeweils eine Punktgröße auf Basis des eingelesenen Farbwertes, des vorgegebenen Schwellwertes und des druckpositionsabhängigen Korrekturwertes bestimmt wird, und der Fehler des Fehlerverteilungsalgorithmus aus der Differenz zwischen dem erstellten Punkt und dem für die Erstellung des jeweiligen Punktes verwendeten Farbwert berechnet wird, wobei das Raster ein AM-Raster ist.

In einer bevorzugten Ausgestaltung kann vorgesehen sein, dass die vom Screening-Algorithmus erstellten Punkte auf Basis des eingelesenen Farbwertes und des vorgegebenen Schwellwertes erstellt werden, und der Fehler des Fehlerverteilungsalgorithmus aus der Differenz zwischen dem erstellten Punkt und der Summe des für die Erstellung des jeweiligen Punktes verwendeten Farbwertes und des druckpositionsabhängigen Korrekturwertes berechnet wird.

In anderen Worten wird somit bevorzugt der Screening-Algorithmus ausgeführt und der Farbwert C(x,y) eingelesen. Dieser wird so lange aufsummiert bzw. integriert bis er einen entsprechenden Schwellwert T erreicht. Daraufhin wird ein Punkt B(x,y) im gerasterten Farbauszug erstellt. Der Fehler e(x,y) des Fehlerverteilungsalgorithmus wird dabei aus der Differenz zwischen dem erstellen Punkt B(x,y) und der Summe aus dem aufsummierten bzw. integrierten Farbwert C(x,y) und dem an der entsprechenden Druckposition vorgesehenen druckpositionsabhängigen Korrekturwert K(x) bestimmt. Der Fehler e(x,y) wird sodann mit den folgenden eingelesenen Farbwerten C(x,y) verrechnet.

Sind mehrere Punktgrößen und Schwellwerte vorgesehen, wird der Fehler e(x,y) bevorzugt aus der Differenz zwischen dem erstellen Punkt B(x,y) und der Summe aus dem aufsummierten bzw. integrierten Farbwert C(x,y) und dem Korrekturwert K(x) derart bestimmt, dass die Punktgröße des Punktes mitberücksichtigt wird.

Bevorzugt kann vorgesehen sein, dass die vom Screening-Algorithmus erstellten Punkte wie vorbeschrieben auf Basis des eingelesenen Farbwertes und des vorgegebenen Schwellwertes erstellt werden, und der Fehler des Fehlerverteilungsalgorithmus aus der Differenz zwischen dem erstellten Punkt und der Summe des für die Erstellung des jeweiligen Punktes verwendeten Farbwertes und des druckpositionsabhängigen Korrekturwertes berechnet wird, wobei das Raster ein FM-Raster ist. In einer bevorzugten Ausgestaltung kann vorgesehen sein, dass das FM-Raster mehr als eine Druckpunktgröße umfasst.

Bevorzugt kann vorgesehen sein, dass der Fehlerverteilungsalgorithmus den Fehler auf den Farbwert von zumindest zwei entlang des Screening-Pfades noch nicht eingelesenen Positionen verteilt, mehr bevorzugt von zumindest 2 bis maximal 10 Positionen, mehr bevorzugt 3, 4, 5, 6, 7, 8, oder 9 Positionen, besonders bevorzugt von 3, 4 oder 5 Positionen.

Bevorzugt kann vorgesehen sein, dass die entlang des Screening-Pfades noch nicht eingelesenen Positionen in Nachbarschaft der Position des eingelesenen Farbwertes liegen, wobei bevorzugt bei der Verteilung des Fehlers eine Gewichtung in Abhängigkeit der Nachbarschaft der Positionen erfolgt.

Beispielsweise können die Positionen in unmittelbarer Nachbarschaft zu der Position des eingelesenen Farbwertes liegen, also direkt and die Position des eingelesenen Farbwertes angrenzend. Die Positionen aber auch lediglich in der Nähe der Position des eingelesenen Farbwertes liegen, also nicht direkt an die Position des eingelesenen Farbwertes angrenzend. Beispielsweise kann unter in der Nähe liegenden Positionen derartige Positionen verstanden werden die über eine, zwei oder drei weitere Positionen mit der Position der eingelesenen Farbwerte verbindbar sind. Besonders bevorzugt kann zumindest eine Position in unmittelbarer Nachbarschaft und zur Position des eingelesenen Farbwertes liegen und zumindest eine Position nicht in unmittelbarer Nachbarschaft. Dabei kann bevorzugt jede der Positionen mit zumindest einer anderen der Positionen in unmittelbarer Nachbarschaft stehen. Bevorzugt kann jede Position mit der Position von zumindest einem bereits eingelesenen Farbwert in unmittelbarer Nachbarschaft stehen.

Bevorzugt kann vorgesehen sein, dass der Fehlerverteilungsalgorithmus ausgewählt ist aus der Gruppe bestehend aus einem Floyd-Steinberg-Algorithmus, einem Shiau-Fan-Algorithmus, und einem Ostromoukhov-Algorithmus.

Der Floyd-Steinberg-Algorithmus ist bekannter Weise beschrieben in R.W. Floyd and L. Steinberg. An adaptive algorithm for spatial grey scale. Proc. Soc. Inf. Display, 17:75-77, 1976.

Der Shiau-Fan-Algorithmus ist in bekannter Weise beschrieben in EP 0659012 A2.

Der Ostromoukhov-Algorithmus ist in bekannter Weise beschrieben in V. Ostromoukhov, A Simple and Efficient Error-Diffusion Algorithm, Proceedings of SIGGRAPH 2001, ACM, 567-572.

In einer bevorzugten Ausgestaltung kann vorgesehen sein, dass der Fehlerverteilungsalgorithmus abhängig vom eingelesenen Farbwert ist. Beispielsweise kann bevorzugt eine Schwellwertabhängige Fehlerverteilung (TDED) verwendet werden. Sind beispielsweise mehrere Punktgrößen und Schwellwerte für ein FM-raster vorgesehen, kann der Fehlerverteilungsalgorithmus beispielsweise in Abhängigkeit des erreichten Schwellwertes ausgewählt werden (TDED-FM).

Mit der Erfindung wird ferner eine Digitaldruckvorrichtung vorgeschlagen, wobei die Digitaldruckvorrichtung zumindest einen Rechner aufweist, der dazu eingerichtet ist das vorbeschriebene Verfahren durchzuführen, wobei die Druckvorrichtung vorzugsweise ein Inkjet-Drucker ist

Mit der Erfindung wird ferner eine Verwendung des vorbeschriebenen Verfahrens oder der vorbeschriebenen Vorrichtung für den Druck von Dekoren vorgeschlagen, insbesondere von Dekoren mit geringer Farbvielfalt, beispielsweise für Holz- und/oder Steindekore, oder unifarbene Dekore.

Es konnte überraschenderweise gezeigt werden, dass sich das vorbeschriebene Verfahren besonders gut für die Farbkorrektur bei solchen Anwendungen eignet. Insbesondere können bei derartigen Dekoren Streifen besonders gut erkannt werden, so dass eine besonders gute Farbkorrektur für qualitativ hochwertige Drucke erforderlich ist.

Weitere Vorteile und vorteilhafte Ausgestaltungen des erfindungsgemäßen Verfahrens sind durch die Figuren veranschaulicht und in der nachfolgenden Beschreibung erläutert. Dabei ist zu beachten, dass die Figuren nur beschreibenden Charakter haben und nicht dazu gedacht sind, die Erfindung in irgendeiner Form einzuschränken.

Es zeigen

Fig. 1 schematisch den Ablauf des Verfahrens nach einer Ausgestaltung der vorliegenden Erfindung,

Fig. 2 schematisch den Ablauf des Screening-Algorithmus in einer Ausgestaltung der vorliegenden Erfindung,

Fig. 3 schematisch den Ablauf des Screening-Algorithmus in einer weiteren Ausgestaltung der vorliegenden Erfindung,

Fig. 4 schematisch den Ablauf des Screening-Algorithmus in einer weiteren Ausgestaltung der vorliegenden Erfindung,

Fig. 5 schematisch den Ablauf des Screening-Algorithmus in einer weiteren Ausgestaltung der vorliegenden Erfindung,

Fig. 6 schematisch den Ablauf des Fehlerverteilungsalgorithmus in einer Ausgestaltung der vorliegenden Erfindung,

Fig. 7 schematisch den Ablauf des Fehlerverteilungsalgorithmus in einer weiteren Ausgestaltung der vorliegenden Erfindung,

Fig. 8 schematisch den Ablauf des Fehlerverteilungsalgorithmus in einer weiteren Ausgestaltung der vorliegenden Erfindung,

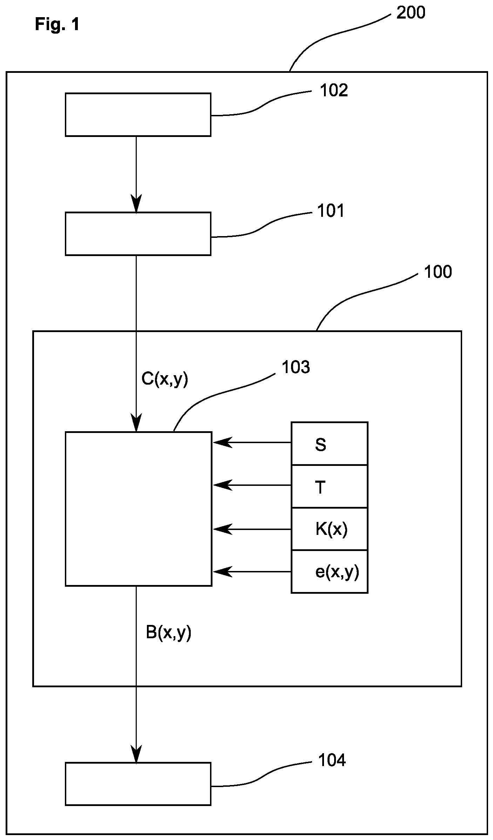

Fig. 1 zeigt Ablauf des Verfahrens nach einer Ausgestaltung der vorliegenden Erfindung. In einem Digitaldrucker 200 wird mit einem Raster-Image-Prozessor 100 aus einem Farbauszug 101 eines vorgegebenen Digitalbildes 102 mit einem Screening-Algorithmus 103 ein gerasterter Farbauszug 104 erstellt. Der Screening-Algorithmus 103 liest dabei Farbwerte C(x,y) des Farbauszugs sequenziell entlang eines Screening-Pfades S ein und erstellt auf Basis der eingelesenen Farbwerte C(x,y) und zumindest einem vorgegeben Schwellwert T Punkte B(x,y) für den gerasterten Farbauszug 104, wobei jeweils in dem Fall dass der Screening-Algorithmus S einen Punkt erstellt ein druckpositionsabhängiger Korrekturwert $K(x)$ berücksichtigt wird. Der Screening-Algorithmus S umfasst in der dargestellten Ausgestaltung einen Fehlerverteilungsalgorithmus $e(x,y)$.

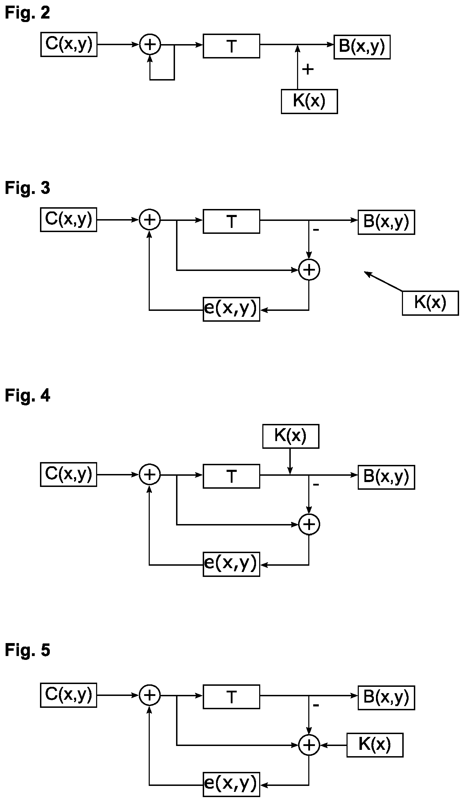

Fig. 2 zeigt schematisch den Ablauf des Screening-Algorithmus in einer Ausgestaltung der vorliegenden Erfindung, wobei der eingelesene Farbwert $C(x,y)$ so lange aufsummiert bzw. integriert wird bis er einen entsprechenden Schwellwert T erreicht. Daraufhin wird ein Punkt $B(x,y)$ im gerasterten Farbauszug erstellt. Der Screening-Algorithmus bestimmt dabei die Punktgröße indem der eingelesene Farbwert $C(x,y)$, der Schwellwert T und der an der entsprechenden Druckposition vorgesehenen druckpositionsabhängigen Korrekturwert $K(x)$ berücksichtigt wird.

Fig. 3 zeigt schematisch den Ablauf des Screening-Algorithmus in einer weiteren Ausgestaltung der vorliegenden Erfindung, der eingelesene Farbwert $C(x,y)$ eingelesen so lange aufsummiert bzw. integriert bis er einen entsprechenden Schwellwert T erreicht. Daraufhin wird ein Punkt $B(x,y)$ im gerasterten Farbauszug erstellt. Der Fehler $e(x,y)$ des Fehlerverteilungsalgorithmus wird dabei aus der Differenz zwischen dem erstellen Punkt $B(x,y)$ und dem aufsummierten bzw. integrierten Farbwert $C(x,y)$ bestimmt, der für die Erstellung des Punktes zu Grunde gelegt wurde. Also dem entsprechenden aufsummierten bzw. integrierten Farbwert. Der Fehler $e(x,y)$ wird sodann mit den folgenden eingelesenen Farbwerten $C(x,y)$ verrechnet. Dabei wird der druckpositionsabhängige Korrekturwert $K(x)$ berücksichtigt.

Fig. 4 zeigt schematisch den Ablauf des Screening-Algorithmus in einer weiteren Ausgestaltung der vorliegenden Erfindung, der eingelesene Farbwert $C(x,y)$ eingelesen so lange aufsummiert bzw. integriert bis er einen entsprechenden Schwellwert T erreicht.. Der Screening-Algorithmus bestimmt dabei die Punktgröße indem der eingelesene Farbwert $C(x,y)$, der Schwellwert T und der an der entsprechenden Druckposition vorgesehenen druckpositionsabhängigen Korrekturwert $K(x)$ berücksichtigt wird. Es wird der druckpositionsabhängige Korrekturwert $K(x)$ mit dem aufsummierten bzw. integrierten Farbwert $C(x,y)$ addiert und auf Basis des erhaltenen Betrags ein Punkt $B(x,y)$ im gerasterten Farbauszug erstellt. Der Fehler $e(x,y)$ des Fehlerverteilungsalgorithmus wird dabei aus der Differenz zwischen dem erstellen Punkt $B(x,y)$ und dem eingelesenen Farbwert $C(x,y)$ und dem druckpositionsabhängigen Korrekturwert $K(x)$ bestimmt, der für die Erstellung des Punktes zu Grunde gelegt wurde. Der Fehler $e(x,y)$ wird sodann mit den folgenden eingelesenen Farbwerten $C(x,y)$ verrechnet.

Fig. 5 zeigt schematisch den Ablauf des Screening-Algorithmus in einer weiteren Ausgestaltung der vorliegenden Erfindung, der eingelesene Farbwert $C(x,y)$ eingelesen so lange aufsummiert bzw. integriert bis er einen entsprechenden Schwellwert T erreicht.. Daraufhin wird ein Punkt $B(x,y)$ im gerasterten Farbauszug erstellt. Der Fehler $e(x,y)$ des Fehlerverteilungsalgorithmus wird dabei aus der Differenz zwischen dem erstellen Punkt $B(x,y)$ und dem eingelesenen Farbwert $C(x,y)$ und dem druckpositionsabhängigen Korrekturwert $K(x)$ bestimmt, der für die Erstellung des Punktes zu Grunde gelegt wurde. Der Fehler $e(x,y)$ wird sodann mit den folgenden eingelesenen Farbwerten $C(x,y)$ verrechnet.

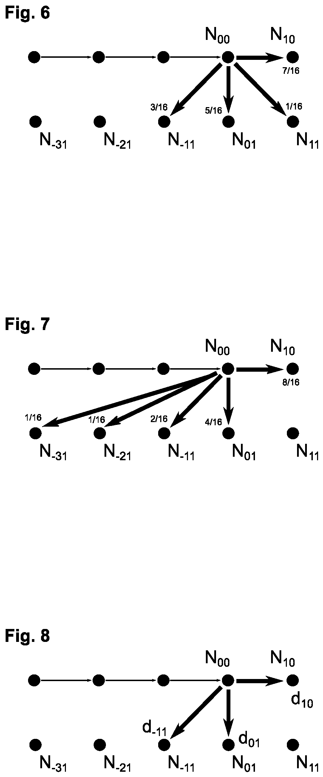

Fig. 6 schematisch den Ablauf des Fehlerverteilungsalgorithmus in einer Ausgestaltung der vorliegenden Erfindung als Floyd-Steinberg Algorithmus. Farbwerte werden entlang eines Screening-Pfades eingelesen. Beim erstellen des Punktes $N_{00}$ wird ein Fehler bestimmt. Dieser wird auf die vier Benachbarten Punkte $N_{10}$, $N_{-11}$, $N_{01}$ und $N_{11}$ mit den angegebenen Gewichtungen verteilt.

Fig. 7 zeigt schematisch den Ablauf des Fehlerverteilungsalgorithmus in einer weiteren Ausgestaltung der vorliegenden Erfindung als Shiau-Fan-Algorithmus. Farbwerte werden entlang eines Screening-Pfades eingelesen. Beim erstellen des Punktes $N_{00}$ wird ein Fehler bestimmt. Dieser wird auf die drei Benachbarten Punkte $N_{10}$, $N_{-11}$, und die zwei nicht direkt benachbarten Punkte $N_{-31}$, und $N_{-21}$ verteilt. Dabei wird ebenfalls eine Gewichtung verwendet wie in Fig. 7 angegeben.

Fig. 8 zeigt schematisch den Ablauf des Fehlerverteilungsalgorithmus in einer weiteren Ausgestaltung der vorliegenden Erfindung als Ostromoukhov -Algorithmus. Farbwerte werden entlang eines Screening-Pfades eingelesen. Beim Erstellen des Punktes $N_{00}$ wird ein Fehler bestimmt und lediiglich auf die drei benachbarten Punkte $N_{10}$, $N_{-11}$, und $N_{01}$ verteilt. Die Gewichtung ist anhand von Distributionskoeffizienten $d_{10}$, $d_{-11}$ und $d_{01}$ gegeben, die in Abhängigkeit des eingelesenen Farbwertes variieren und beispielsweise in einer Tabelle hinterlegt sein können.

**Patentansprüche**

1.  Verfahren zur Farbkorrektur in einem Digitaldruckverfahren,

    wobei mit einem Raster-Image-Prozessor (100) aus zumindest einem Farbauszug (101) eines vorgegebenen Digitalbildes (102) mit einem Screening-Algorithmus (103) ein gerasterter Farbauszug (104) erstellt wird,
    wobei der Screening-Algorithmus (103) Farbwerte des Farbauszugs (101) sequenziell entlang eines Screening-Pfades einliest und auf Basis der eingelesenen Farbwerte und zumindest einem vorgegeben Schwellwert Punkte für den gerasterten Farbauszug erstellt, wobei jeweils in dem Fall dass der Screening-Algorithmus einen Punkt erstellt ein druckpositionsabhängiger Korrekturwert berücksichtigt wird.

2. Verfahren nach Anspruch 1, wobei der mit dem Verfahren erhaltene gerasterte Farbauszug auf einem Digitaldrucker (200) gedruckt wird.

3. Verfahren nach einem der Ansprüche 1 oder 2, wobei der Screening-Algorithmus bei der Erstellung des gerasterten Farbauszug ein Raster zu verwendet, beispielsweise ein AM-Raster oder ein FM-Raster, wobei vorzugsweise das Verfahren mehrere Farbauszüge und gerasterte Farbauszüge umfasst und der Screening-Algorithmus bei der Erstellung der gerasterten Farbauszüge ein Rastersystem verwendet, beispielsweise ein AM-Rastersystem oder ein FM-Rastersystem.

4. Verfahren nach einem der Ansprüche 1 bis 3, wobei der druckpositionsabhängige Korrekturwert das Produkt aus einem druckpositionsspezifischen Korrektur-Rohwert und optional zumindest einem Skalierungsfaktor ist, wobei der Skalierungsfaktor bevorzugt ausgewählt ist aus einem konstanten Skalierungsfaktor, einem farbwertabhängigen Skalierungsfaktor und einem punktgrößenabhängigen Skalierungsfaktor, wobei besonders bevorzugt der druckpositionsabhängige Korrekturwert das Produkt aus dem druckpositionsspezifischen Korrektur-Rohwert, dem konstanten Skalierungsfaktor und dem punktgrößenabhängigen Skalierungsfaktor ist.

5. Verfahren nach einem der Ansprüche 1 bis 4, wobei der druckpositionsabhängige Korrekturwert aus der Farbdifferenz zwischen zumindest einem vorgegebenen Testbild und druckpositionsabhängigen Farbmessungen eines auf Basis des vorgegebenen Testbildes erstellten Testdruckes erhalten wurde, insbesondere von Testdrucken mit verschiedenen Farbwerten und/oder Punktgrößen.

6. Verfahren nach Anspruch 5, wobei beim erstellen des Testdruckes auf Basis des vorgegebenen Testbildes ein Screening-Algorithmus verwendet wird, der das gleiche Rastersystem verwendet wie der Screening-Algorithmus zum erstellen des gerasterten Farbauszugs aus dem Farbauszug des vorgegebenen Digitalbildes.

7. Verfahren nach einem der Ansprüche 1 bis 6, wobei der druckpositionsabhängige Korrekturwert derart berücksichtigt wird, dass für die vom Screening-Algorithmus erstellten Punkte jeweils eine Punktgröße auf Basis des eingelesenen Farbwertes, des vorgegebenen Schwellwertes und des druckpositionsabhängigen Korrekturwertes bestimmt wird.

8. Verfahren nach einem der Ansprüche 1 bis 7, wobei der Screening-Algorithmus einen Fehlerverteilungsalgorithmus umfasst, wobei vorzugsweise der Fehlerverteilungsalgorithmus einen Fehler aus der Differenz zwischen dem erstellten Punkt und zumindest dem für die Erstellung des jeweiligen Punktes verwendeten Farbwert berechnet, wobei der Fehler auf den Farbwert von zumindest einer entlang des Screening-Pfades noch nicht eingelesenen Position verteilt wird, und wobei der Fehler vorzugsweise den druckpositionsabhängigen Korrekturwert berücksichtigt.

9. Verfahren nach Anspruch 8, wobei für die vom Screening-Algorithmus erstellten Punkte jeweils eine Punktgröße auf Basis des eingelesenen Farbwertes, des vorgegebenen Schwellwertes und des druckpositionsabhängigen Korrekturwertes bestimmt wird, und der Fehler des Fehlerverteilungsalgorithmus aus der Differenz zwischen dem erstellten Punkt und der Summe des für die Erstellung des jeweiligen Punktes verwendeten Farbwertes und des druckpositionsabhängigen Korrekturwertes berechnet wird.

10. Verfahren nach Anspruch 8, wobei für die vom Screening-Algorithmus erstellten Punkte auf Basis des eingelesenen Farbwertes und des vorgegebenen Schwellwertes erstellt werden, und der Fehler des Fehlerverteilungsalgorithmus aus der Differenz zwischen dem erstellten Punkt und der Summe des für die Erstellung des jeweiligen Punktes verwendeten Farbwertes und des druckpositionsabhängigen Korrekturwertes berechnet wird.

11. Verfahren nach einem der Ansprüche 8 bis 10, wobei der Fehlerverteilungsalgorithmus den Fehler auf den Farbwert von zumindest zwei entlang des Screening-Pfades noch nicht eingelesenen Positionen verteilt, mehr bevorzugt von zumindest 2 bis maximal 10 Positionen, mehr bevorzugt 3, 4, 5, 6, 7, 8, oder 9 Positionen, besonders bevorzugt von 3, 4 oder 5 Positionen.

12. Verfahren nach einem der Ansprüche 8 oder 11, wobei die entlang des Screening-Pfades noch nicht eingelesenen Positionen in Nachbarschaft der Position des eingelesenen Farbwertes liegen, wobei bevorzugt bei der Verteilung des Fehlers eine Gewichtung in Abhängigkeit der Nachbarschaft der Positionen erfolgt.

13. Verfahren nach einem der Ansprüche 8 bis 12, wobei der Fehlerverteilungsalgorithmus ausgewählt ist aus der Gruppe bestehend aus einem Floyd-Steinberg-Algorithmus, einem Shiau-Fan-Algorithmus, und einem Ostromoukhov-Algorithmus.

14. Digitaldruckvorrichtung, wobei die Digitaldruckvorrichtung zumindest einen Rechner aufweist, der dazu eingerichtet ist das Verfahren nach einem der Ansprüche 1 bis 13 durchzuführen, wobei die Druckvorrichtung vorzugsweise ein Inkjet-Drucker ist.

15. Verwendung des Verfahrens nach einem der Ansprüche 1 bis 13 oder der Digitaldruckvorrichtung nach Anspruch 14 für den Druck von Dekoren, bevorzugt von Dekoren mit geringer Farbvielfalt, beispielsweise für Holz- und/oder Steindekore, oder unifarbene Dekore.

**Fig. 1**

**Fig. 2**

**Fig. 3**

**Fig. 4**

**Fig. 5**

**Fig. 6**

**Fig. 7**

**Fig. 8**

Europäisches
Patentamt

European
Patent Office

Office européen
des brevets

# EUROPÄISCHER RECHERCHENBERICHT

Nummer der Anmeldung

EP 24 16 3310

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2019/217629 A1 (FUNATSU YOHEI [JP]) 18. Juli 2019 (2019-07-18) * Absätze [0003], [0019] - [0072] * - - - - - | 1-15 | INV. H04N1/401 H04N1/405 |
| X | US 2009/051944 A1 (BRACKE PETER [BE] ET AL) 26. Februar 2009 (2009-02-26) * Absätze [0088] - [0138], [0162] - [0174] * - - - - - | 1-15 | ADD. H04N1/60 |
| A,D | EP 4 113 964 A1 (AKZENTA PANEELE PROFILE GMBH [DE]) 4. Januar 2023 (2023-01-04) * das ganze Dokument * - - - - - | 15 | |

RECHERCHIERTE SACHGEBIETE (IPC)

H04N

Der vorliegende Recherchenbericht wurde für alle Patentansprüche erstellt

| Recherchenort | Abschlußdatum der Recherche | Prüfer |
|---|---|---|
| Den Haag | 31. Juli 2024 | Hardell, Alexander |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 24 16 3310

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-07-2024

| Im Recherchenbericht angeführtes Patentdokument | Datum der Veröffentlichung | Mitglied(er) der Patentfamilie | Datum der Veröffentlichung |
|---|---|---|---|
| US 2019217629 A1 | 18-07-2019 | JP 6423824 B2 | 14-11-2018 |
| | | JP 2018006873 A | 11-01-2018 |
| | | US 2019217629 A1 | 18-07-2019 |
| | | WO 2018003537 A1 | 04-01-2018 |
| US 2009051944 A1 | 26-02-2009 | CN 101194499 A | 04-06-2008 |
| | | EP 1732306 A1 | 13-12-2006 |
| | | JP 2008542084 A | 27-11-2008 |
| | | KR 20080014018 A | 13-02-2008 |
| | | US 2009051944 A1 | 26-02-2009 |
| | | WO 2006131494 A1 | 14-12-2006 |
| EP 4113964 A1 | 04-01-2023 | BR 112023026366 A2 | 05-03-2024 |
| | | CA 3224764 A1 | 05-01-2023 |
| | | CN 117597912 A | 23-02-2024 |
| | | EP 4113964 A1 | 04-01-2023 |
| | | EP 4364400 A1 | 08-05-2024 |
| | | KR 20240026227 A | 27-02-2024 |
| | | WO 2023275156 A1 | 05-01-2023 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 4113963 A1
- EP 4113964 A1
- EP 3570530 A1
- EP 0659012 A2

**In der Beschreibung aufgeführte Nicht-Patentliteratur**

- **R.W. FLOYD** ; **L. STEINBERG**. An adaptive algorithm for spatial grey scale. *Proc. Soc. Inf. Display*, 1976, vol. 17, 75-77
- A Simple and Efficient Error-Diffusion Algorithm. **V. OSTROMOUKHOV**. Proceedings of SIGGRAPH. ACM, 2001, 567-572